# EUROPÄISCHE PATENTSCHRIFT

(11) **EP 1 398 097 B1**
(45) Veröffentlichungstag und Bekanntmachung des Hinweises auf die Patenterteilung: **22.06.2011**
(21) Anmeldenummer: 03020225.3
(22) Anmeldetag: 06.09.2003
(51) Int. Cl.: B23P 15/14

(54) **Verfahren zum Herstellen eines schrägverzahnten Stirnrad-Verbunds**
Process for producing compound helical gears
Procédé de fabrication de roues composées à denture hélicoidale

(30) Priorität: 12.09.2002 US 242367
(43) Veröffentlichungstag der Anmeldung: 17.03.2004
(73) Patentinhaber: DEERE & COMPANY, Moline, Illinois 61265-8098 (US)
(72) Erfinder: Puetz, Craig Alan, Waterloo IA 50701 (US); Johnson, Paul Warren, Denver IA 50622 (US)
(74) Vertreter: Magin, Ludwig Bernhard

(56) Entgegenhaltungen:
- EP-A1- 0 619 157
- DE-A1- 19 654 896
- FR-A1- 2 438 205
- FR-A1- 2 763 267
- GB-A- 168 599
- GB-A- 713 587
- GB-A- 2 018 178
- US-A- 3 531 976
- US-A- 5 864 950

## Beschreibung

Die vorliegende Erfindung bezieht sich auf ein Verfahren zum Herstellen eines schrägverzahnten Stirnradverbunds aus einem Zahnradrohling. Der schrägverzahnte Stirnradverbund weist mehrere schrägverzahnte Stirnradelemente unterschiedlicher Steigung auf.

Ein schrägverzahnter Stirnradverbund ist beispielsweise in Umlaufgetriebeanordnungen und insbesondere in Planetengetriebesätzen vorgesehen. Planetengetriebesätze werden üblicherweise in Getrieben und in drehzahlreduzierenden Vorrichtungen in motorbetriebenen Fahrzeugen verwendet. Ein Stirnradverbund im Sinne der vorliegenden Erfindung ist ein Getriebeteil, welches eine Vielzahl von Stirnradelementen aufweist, beispielsweise in Form von axial voneinander beabstandeten Zahnrädern, welche integral aus einem einzelnen Zahnradrohling gefertigt werden. Üblicherweise umfasst ein Stirnradverbund ein Stirnradelement mit einem größeren Durchmesser und ein oder mehrere davon axial beabstandete Stirnradelemente mit einem demgegenüber kleineren Durchmesser, wobei die Stirnradelemente um eine gemeinsame Drehachse angeordnet sind. Die Verwendung mehrerer Stirnradverbunde ermöglicht die Herstellung kompakter Planetengetriebesätze bzw. Umlaufgetriebeanordnungen.

Grundsätzlich wird bei der Entwicklung von motorbetriebenen Fahrzeugen versucht, die Charakteristik eines Antriebsstrangs bezüglich Geräuschentwicklung und Schwingungen zu reduzieren. So ist es beispielsweise bekannt, in Planetengetriebesätzen Stirnradverbunde mit geradeverzahnten Stirnrädern zu verwenden. Jedoch weisen geradeverzahnte Stirnradverbunde immanent eine hohe Geräuschentwicklung während des Betriebs auf. Des Weiteren umfassen geradverzahnte Stirnräder Zähne, welche mit den Zähnen eines Gegenrads stets über ihre gesamte Zahnbreite entlang einer zur Drehachse parallel angeordneten Strecke in Kontakt stehen. Bei schrägverzahnten Stirnrädern hingegen verläuft der Kontakt über die Zahnbreite beginnend an einem Verbindungspunkt auf der einen Seite und endet an einem Verbindungspunkt auf der anderen Seite. Aufgrund dessen können schrägverzahnte Stirnräder bei höheren Drehzahlen und mit größeren Lasten betrieben werden, als dies bei geradeverzahnten Stirnrädern der Fall ist. Zugleich laufen schrägverzahnte Stirnräder ruhiger und leiser. Dementsprechend wird in Planetengetriebesätzen häufig die Verwendung schrägverzahnter Stirnräder anstelle geradeverzahnter Stirnräder bevorzugt.

Die DE 19654896 A1 wird als nächstliegender Stand der Technik angesehen.

Die Verwendung schrägverzahnter Stirnräder weist jedoch auch Nachteile auf. Da die Kraft, die von ineinandergreifenden Zähnen schrägverzahnter Stirnräder übertragen wird, stets senkrecht zur Oberfläche des Zahns gerichtet ist, erzeugen schrägverzahnte Stirnräder eine zu einer axialen Kraft führende Kraftkomponente entlang der Stirnradachse. Um dieser axialen Kraft entgegenzuwirken, werden beispielsweise pfeilverzahnte Stirnräder oder kraftaufnehmende Lager verwendet. Allerdings sind solche Lösungsansätze teuer und in vielen Situationen unpraktikabel.

Es hat sich gezeigt, dass axiale Kräfte, welche durch schrägverzahnte Stirnräder erzeugt werden, teilweise gegenseitig aufgehoben werden können, wenn ein Stirnradverbund verwendet wird, bei welchem die Stirnräder eine unterschiedliche Steigung aufweisen. Die Verwendung zusammengesetzter schrägverzahnter Stirnradverbunde mit Stirnrädern unterschiedlicher Steigung ermöglicht es ferner, dass die einzelnen Stirnräder unabhängig voneinander ausgelegt werden können, um die Leistungsfähigkeit des Planetengetriebesatzes zu optimieren.

Die Verwendung solcher Stirnradverbunde hat sich jedoch bisher mangels geeigneter Herstellungsverfahren als unmöglich herausgestellt, da die Anordnung der Zähne der Stirnräder in umfangsmäßiger Richtung aufeinander abgestimmt sein muss, um die Last gleichmäßig zu verteilen. So führen übliche Herstellungsverfahren zu einer Veränderung der Zahnprofile und des axialen Abstands zwischen den Stirnrädern und damit zu einem unbefriedigenden "Timing". Letzteres kann zu einem Versagen des Getriebes führen.

Unter dem Begriff "Timing" ist hierbei allgemein der Abstand zu verstehen, den ein Zahn eines Stirnrads in umfangsmäßiger Richtung zu einem Zahn eines anderen Stirnrads aufweist.

Der vorliegenden Erfindung liegt daher die Aufgabe zugrunde, ein Verfahren der eingangs genannten Art anzugeben und weiterzubilden, durch welches die vorgenannten Probleme überwunden werden. Insbesondere soll ein Verfahren zur Herstellung eines schrägverzahnten Stirnradverbunds angegeben und weitergebildet werden, mit welchen schrägverzahnte Stirnradverbunde hergestellt werden können, bei welchen das "Timing" zwischen den Stirnradelementen aufrechterhalten wird, um insbesondere eine Gleichverteilung der Last der Planetenzahnräder eines Planetengetriebesatzes zu gewährleisten.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst das Verfahren der eingangs genannten Art folgende Arbeitsschritte:
- Einbringen einer axialen Bohrung in den Zahnradrohling,
- Herstellen einer Montageschulter an dem Zahnradrohling, vorzugsweise im Außenbereich der Bohrung,
- Herstellen eines ersten schrägverzahnten Stirnradelements mit einer ersten Steigung an dem Zahnradrohling,
- Festlegen eines Referenzzahns an dem ersten schrägverzahnten Stirnradelement, und
- Herstellen mindestens eines weiteren schrägverzahnten Stirnradelements an dem Zahnradrohling, wobei die Montageschulter als Referenz dient, um den Abstand in axialer Richtung zwischen dem ersten schrägverzahnten Stirnradelement und einem weiteren schrägverzahnten Stirnradelement festzulegen, wobei ein Zahn des weiteren schrägverzahnten Stirnradelements in umfangsmäßiger Richtung einen vorgegebenen Abstand und damit ein bestimmtes "Timing" zu dem Referenzzahn des ersten schrägverzahnten Stirnradelements aufweist, und wobei das weitere schrägverzahnte

Stirnradelement eine von dem ersten schrägverzahnten Stirnradelement unterschiedliche Steigung aufweist.

Die Arbeitsschritte des vorstehend beschriebenen Herstellungsverfahrens zielen darauf ab, dass der schrägverzahnte Stirnradverbund integral aus einem einzelnen Zahnradrohling hergestellt wird.

Somit wird in erfindungsgemäßer Weise ein Herstellungsverfahren für einen schrägverzahnten Stirnradverbund für Umlaufgetriebeanordnungen bzw. Planetengetriebesätze angegeben, bei welchem die einzelnen Stirnradelemente des Stirnradverbunds unterschiedliche Steigungen aufweisen. Das Herstellungsverfahren nutzt unterschiedliche Faktoren, welche das "Timing" der Stirnradelemente des schrägverzahnten Stirnradverbunds mit unterschiedlicher Steigung betreffen, um einen Planetengetriebesatz zur Verfügung zu stellen, bei welchem eine gleichmäßige Lastverteilung zwischen den einzelnen Stirnradelementen gewährleistet ist. Insbesondere verwendet das erfindungsgemäße Herstellungsverfahren eine Montageschulter und eine axiale Bohrung, um gemeinsame Lagemerkmale festzulegen, welche im Laufe des gesamten Herstellungsprozesses beibehalten werden.

In einem weiteren Arbeitsschritt kann vorgesehen sein, die gleiche Materialmenge von beiden Seiten eines jeden Zahns eines jeden schrägverzahnten Stirnradelements zu entfernen. Hierdurch kann ein endgültiges Zahnprofil hergestellt werden, bei welchem ein bestimmtes "Timing" zwischen den Stirnradelementen hergestellt und beibehalten erhalten wird.

Zusätzlich oder alternativ kann die Bohrung des schrägverzahnten Stirnradverbunds oder die Bohrung des schrägverzahnten Stirnradelements gehont werden, um einen endgültigen Sitz auf einer Welle herzustellen. Auch diese Maßnahme dient letztendlich der Herstellung und Beibehaltung eines bestimmten "Timings" zwischen den Stirnradelementen.

Des Weiteren kann ein Verfahren zur Herstellung einer Umlaufgetriebeanordnung bzw. eines Planetengetriebesatzes vorgesehen sein, welche bzw. welcher einen Planetenträger und mehrere der erfindungsgemäß hergestellten schrägverzahnten Stirnradverbunde aufweist.

Hierbei können in einem weiteren Arbeitsschritt an dem Planetenträger Lagersitze zur drehbaren Lagerung der schrägverzahnten Stirnradverbunde ausgebildet werden. Die Lagersitze sind an dem Planetenträger koplanar angeordnet.

Vorzugsweise werden die schrägverzahnten Stirnradverbunde an dem Planetenträger mithilfe von an den Lagersitzen befestigten Lagern drehbar gelagert. Die Lager sind an dem Planetenträger koplanar zueinander angeordnet.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung der bevorzugten Ausführungsbeispiele der Erfindung anhand der Zeichnungen verwiesen. Es zeigen:
- Fig. 1: eine perspektivische Ansicht eines mithilfe des er- findungsgemäßen Verfahrens hergestellten schrägver- zahnten Stirnradverbunds, und
- Fig. 2: eine perspektivische Ansicht der Rückseite des schrägverzahnten Stirnradverbunds gemäß Fig. 1.

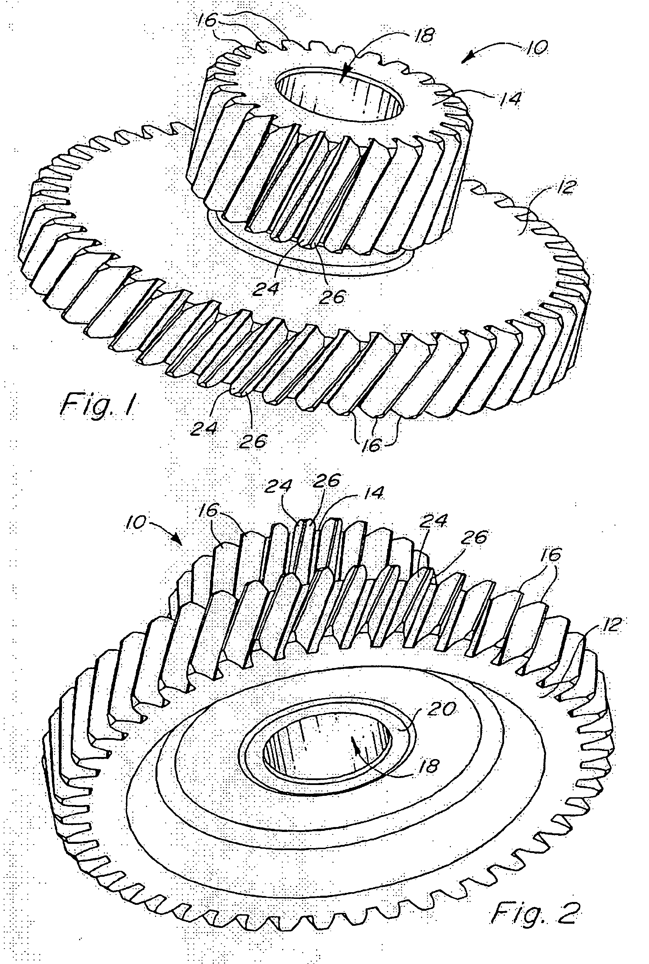

Zum besseren Verständnis wird zunächst ein mithilfe des erfindungsgemäßen Verfahrens hergestellter schrägverzahnter Stirnradverbund 10 erläutert, welcher in Fig. 1 und 2 gezeigt ist. Der schrägverzahnte Stirnradverbund 10 weist ein erstes schrägverzahntes Stirnradelement 12 und ein zweites schrägverzahntes Stirnradelement 14 auf. Das den schrägverzahnten Stirnradverbund 10 bildende erste und zweite schrägverzahnte Stirnradelement 12, 14 ist integral aus einem einzelnen Zahnradrohling gefertigt.

Das zweite schrägverzahnte Stirnradelement 14 hat einen kleineren Durchmesser als das erste schrägverzahnte Stirnradelement 12. Obwohl der in Fig. 1 und 2 gezeigte schrägverzahnte Stirnradverbund 10 lediglich zwei Stirnradelemente 12, 14 aufweist, kann mittels des erfindungsgemäßen Verfahrens ebenfalls ein schrägverzahnter Stirnradverbund 10 mit weiteren schrägverzahnten Stirnradelementen unterschiedlicher Durchmesser hergestellt werden.

Die schrägverzahnten Stirnradelemente 14, 16 umfassen eine Vielzahl von bezüglich der Drehachse schräg angeordneten Zähnen 16. Die Steigungen der schrägverzahnten Stirnradelemente 12, 14 weisen beispielsgemäß die gleiche Ausrichtung auf, unterscheiden sich jedoch bezüglich ihres Winkels. Obwohl der in Fig. 1 und 2 gezeigte schrägverzahnte Stirnradverbund 10 Stirnradelemente 12, 14 aufweist, welche Steigungen gleicher Ausrichtung aufweisen, kann auch ein schrägverzahnter Stirnradverbund 10 hergestellt werden, dessen schrägverzahnte Stirnradelemente Steigungen entgegengesetzter Ausrichtung bzw. Orientierung aufweisen.

Das erste und das zweite schrägverzahnte Stirnradelement 12, 14 ist um eine gemeinsame axiale Bohrung 18 angeordnet. Der schrägverzahnte Stirnradverbund 10 weist eine in Fig. 2 gezeigte Montageschulter 20 auf, welche im Außenbereich der Bohrung 18 angeordnet ist. Jeder Zahn 16 des ersten und des zweiten schrägverzahnten Stirnradelements 12, 14 umfasst eine erste Zahnflanke 24 auf der einen Seite des Zahns 16 und eine zweite Zahnflanke 26 auf der gegenüberliegenden Seite des Zahns 16.

Es ist für sich gesehen bekannt, dass in einem Planetengetriebesatz zur Erzielung einer ausgeglichenen Lastverteilung die Planetenzahnräder ein bestimmtes Timing aufweisen müssen. Die vorliegende Erfindung betrifft ein Herstellungsverfahren, bei welchem das Timing zwischen den unterschiedlichen Planetenzahnrädern eines Planetengetriebesatzes während des Herstellungsprozesses festgelegt und beibehalten wird.

Das erfindungsgemäße Herstellungsverfahren beginnt mit einem Zahnradrohling, welcher ein Profil bzw. einen Querschnitt aufweist, der dem des fertiggestellten Zahnrads ungefähr entspricht. In den Zahnradrohling wird zunächst die Bohrung 18 eingebracht. Danach wird die Montageschulter 20 angebracht. Sobald die Achse der Bohrung 18 und die Montageschulter 20 hergestellt sind, werden die Zähne 16 des ersten schrägverzahnten Stirnradelements 12 beispielsweise durch Walzfräsen in den Zahnradrohling geschnitten.

Das erfindungsgemäße Herstellungsverfahren weist hierbei den Vorteil auf, dass einzelne Elemente des Planetengetriebesatzes unabhängig voneinander ausgelegt werden können, beispielsweise mit dem Ziel, das Leistungsvermögen des Getriebezugs zu optimieren. Dementsprechend können Parameter der Zahnradkonstruktion für das erste schrägverzahnte Stirnradelement 12 frei gewählt werden. Hierzu zählen beispielsweise die Anzahl der Zähne 16, der Steigungswinkel, die Lückenweite und die Breite der Zahnflanken 24, 26. Die Wahl unterliegt keinen weiteren Einschränkungen, welche normalerweise mit einem Getriebezug verbunden sind, dessen Elemente dieselbe Steigung aufweisen.

Nach Fertigstellung des ersten schrägverzahnten Stirnradelements 12 wird ein Zahn als Referenzzahn 16 gewählt. Anschließend wird das zweite schrägverzahnte Stirnradelement 14 an dem Zahnradrohling hergestellt, wobei die Montageschulter 20 als Basis- bzw. Referenzlinie dient, um den axialen Abstand zwischen dem zweiten schrägverzahnten Stirnradelement 14 relativ zum ersten schrägverzahnten Stirnradelement 12 festzulegen. Die Achse der Bohrung 18 wird als Basis- bzw. Referenzlinie verwendet, um die Konzentrizität des zweiten schrägverzahnten Stirnradelements 14 in radialer Richtung zu gewährleisten. Während des Herstellungsvorgangs der Zähne 16 des zweiten schrägverzahnten Stirnradelements 14 wird zur Festlegung des Timings in umfangsmäßiger Richtung der Referenzzahn des ersten schrägverzahnten Stirnradelements 12 als eine Basis- bzw. Referenzlinie herangezogen.

Nach Anwendung der oben beschriebenen Arbeitsschritte weisen die schrägverzahnten Stirnradelemente 12, 14 einen exakten axialen und radialen Abstand sowie ein exaktes Timing zueinander auf, so dass eine gleichmäßige Lastverteilung im Planetengetriebe erzielt wird. Dementsprechend ist es für das erfindungsgemäße Verfahren zur Herstellung eines schrägverzahnten Stirnradverbunds 10 erforderlich, dass die aufeinanderfolgenden Arbeitsschritte zur Herstellung des Zahnrads derart durchgeführt werden, dass der Abstand und/oder das Timing der einzelnen Stirnradelemente während des gesamten Herstellungsprozesses unverändert bleibt.

Insbesondere ist es im Falle einer Nachbearbeitung des Stirnradverbunds 10 zum Erzielen einer endgültigen Passung der Bohrung 18 erforderlich, ein Honen, ein Feinschleifen oder einen entsprechenden Arbeitsschritt vorzusehen, welcher die Achse der vorhandenen Bohrung 18 unverändert lässt. Techniken, wie beispielsweise das Aufbohren, können die Lage der Achse der Bohrung 18 und damit das "Timing" der Stirnradelemente 12, 14 verändern. Im Hinblick auf die Fertigstellung der Zähne 16 ist es darüber hinaus erforderlich, dass die gleiche Materialmenge von der ersten und von der zweiten Zahnflanke 24, 26 entfernt wird, so dass das "Timing" der Stirnradelemente 12, 14 nicht verändert wird. Dies kann durch Verwendung eines spanabhebenden Bearbeitungsverfahrens erzielt werden, das vorzugsweise dann durchgeführt wird, wenn sich die Stirnradelemente 12, 14 in ihrem rohen bzw. ungehärteten Zustand befinden. Es wird allerdings bevorzugt, die Zähne 16 durch Honen oder Schleifen der gehärteten Stirnradelemente 12, 14 fertigzustellen, da in diesem Fall eine verbesserte Kontrolle des Herstellungsprozesses möglich ist.

Die vorstehend beschriebenen Arbeitsschritte ermöglichen es, einen schrägverzahnten Stirnradverbund mit Stirnradelementen unterschiedlicher Steigungen herzustellen, so dass eine ausgeglichene Lastverteilung zwischen den einzelnen Planetenzahnrädern eines Planetengetriebesatzes erzielt werden kann.

## Patentansprüche

1. Verfahren zum Herstellen eines schrägverzahnten Stirnradverbunds aus einem Zahnradrohling, wobei der schrägverzahnte Stirnradverbund (10) mehrere schrägverzahnte Stirnradelemente (12, 14) unterschiedlicher Steigung aufweist, wobei das Herstellungsverfahren folgende Arbeitsschritte umfasst:
- Einbringen einer axialen Bohrung (18) in den Zahnradrohling,
- Herstellen einer Montageschulter (20) an dem Zahnradrohling, vorzugsweise im Außenbereich der Bohrung (18),
- Herstellen eines ersten schrägverzahnten Stirnradelements (12) mit einer ersten Steigung an dem Zahnradrohling,
- Festlegen eines Referenzzahns an dem ersten schrägverzahnten Stirnradelement (12), und
- Herstellen mindestens eines weiteren schrägverzahnten Stirnradelements (14) an dem Zahnradrohling, wobei die Montageschulter (20) als Referenz dient, um den Abstand in axialer Richtung zwischen dem ersten schrägverzahnten Stirnradelement (12) und dem weiteren schrägverzahnten Stirnradelement (14) festzulegen, wobei ein Zahn (16) des weiteren schrägverzahnten Stirnradelements (14) in umfangmäßiger Richtung einen vorgegebenen Abstand zu dem Referenzzahn des ersten schrägverzahnten Stirnradelements (12) aufweist, und wobei das weitere schrägverzahnte Stirnradelement (14) eine von dem ersten schrägverzahnten Stirnradelement (12) unterschiedliche Steigung aufweist.

2. Verfahren nach Anspruch 1, **dadurch gekennzeichnet, dass** die gleiche Materialmenge von beiden Seiten eines jeden Zahns (16) eines jeden schrägverzahnten Stirnradelements (12, 14) entfernt wird, um ein endgültiges Zahnprofil herzustellen.

3. Verfahren nach Anspruch 1 oder 2, **dadurch gekennzeichnet, dass** die Bohrung (18) des schrägverzahnten Stirnradverbunds (10) oder die Bohrung (18) des schrägverzahnten Stirnradelements (12, 14) gehont wird, um einen endgültigen Sitz auf einer Welle herzustellen.

4. Verfahren zur Herstellung einer Umlaufgetriebeanordnung, welche einen Planetenträger und mehrere schrägverzahnte Stirnradverbunde (10) aufweist, wobei jeder der schrägverzahnten Stirnradverbunde (10) nach einem der Ansprüche 1 bis 3 hergestellt ist.

5. Verfahren nach Anspruch 4, **dadurch gekennzeichnet, dass** an dem Planetenträger Lagersitze zur drehbaren Lagerung der schrägverzahnten Stirnradverbunde (10) ausgebildet werden, wobei die Lagersitze koplanar zueinander angeordnet sind.

6. Verfahren nach Anspruch 5, **dadurch gekennzeichnet, dass** die schrägverzahnten Stirnradverbunde (10) an dem Planetenträger mithilfe von an den Lagersitzen befestigten Lagern drehbar gelagert werden, wobei die Lager koplanar zueinander angeordnet sind.

## Claims

1. Method for producing a composite helical spur wheel assembly from a gearwheel blank, the composite helical spur wheel assembly (10) having a plurality of helical spur wheel elements (12, 14) of different pitch, the production method comprising the following work steps:
- introduction of an axial bore (18) into the gearwheel blank,
- production of a mounting shoulder (20) on the gearwheel blank, preferably in the outer region of the bore (18),
- production of a first helical spur wheel element (12) with a first pitch on the gearwheel blank,
- definition of a reference tooth on the first helical spur wheel element (12), and
- production of at least one further helical spur wheel element (14) on the gearwheel blank, the mounting shoulder (20) serving as a reference in order to fix the spacing in the axial direction between the first helical spur wheel element (12) and the further helical spur wheel element (14), a tooth (16) of the further helical spur wheel element (14) having in the circumferential direction a stipulated spacing from the reference tooth of the first helical spur wheel element (12), and the further helical spur wheel element (14) having a pitch different from that of the first helical spur wheel element (12).

2. Method according to Claim 1, **characterized in that** the same quantity of material is removed from both sides of each tooth (16) of each helical spur wheel element (12, 14) in order to produce a final tooth profile.

3. Method according to Claim 1 or 2, **characterized in that** the bore (18) of the composite helical spur wheel assembly (10) or the bore (18) of the helical spur wheel element (12, 14) is honed in order to produce a final fit on a shaft.

4. Method for producing an epicyclic gear arrangement which has a planet carrier and a plurality of composite helical spur wheel assemblies (10), each of the composite helical spur wheel assemblies (10) being produced according to one of Claims 1 to 3.

5. Method according to Claim 4, **characterized in that** bearing seats for the rotatable mounting of the composite helical spur wheel assemblies (10) are formed on the planet carrier, the bearing seats being arranged so as to be coplanar with one another.

6. Method according to Claim 5, **characterized in that** the composite helical spur wheel assemblies (10) are mounted rotatably on the planet carrier with the aid of bearings fastened to the bearing seats, the bearings being arranged so as to be coplanar with one another.

## Revendications

1. Procédé de fabrication d'une roue droite composée à denture hélicoïdale à partir d'une ébauche de roue dentée, dans lequel la roue droite composée à denture hélicoïdale (10) comprend plusieurs éléments de roue droite à denture hélicoïdale (12, 14) de pas différent, le procédé de fabrication comportant les étapes suivantes:
- perçage d'un alésage axial (18) dans l'ébauche de roue dentée,
- réalisation d'un épaulement de montage (20) sur l'ébauche de roue dentée, de préférence dans la zone extérieure de l'alésage (18),
- production d'un premier élément de roue droite à denture hélicoïdale (12) avec un premier pas sur l'ébauche de roue dentée,
- fixation d'une dent de référence sur le premier élément de roue droite à denture hélicoïdale (12), et
- production d'au moins un autre élément de roue droite à denture hélicoïdale (14) sur l'ébauche de roue dentée, l'épaulement de montage (20) servant de référence pour fixer l'espacement en direction axiale entre le premier élément de roue droite à denture hélicoïdale (12) et l'autre élément de roue droite à denture hélicoïdale (14), dans lequel une dent (16) de l'autre élément de roue droite à denture hélicoïdale (14) présente, en direction périphérique, un espacement prédéterminé par rapport à la dent de référence du premier élément de roue droite à denture hélicoïdale (12), et dans lequel l'autre élément de roue droite à denture hélicoïdale (14) présente un pas différent de celui du premier élément de roue droite à denture hélicoïdale (12).

2. Procédé selon la revendication 1, **caractérisé en ce que** l'on enlève la même quantité de matière sur les deux côtés de chacune des dents (16) de chacun des éléments de roue droite à denture hélicoïdale (12, 14), afin de produire un profil de dent définitif.

3. Procédé selon la revendication 1 ou 2, **caractérisé en ce que** l'on soumet à un honage l'alésage (18) de la roue droite composée à denture hélicoïdale (10) ou l'alésage (18) de l'élément de roue droite à denture hélicoïdale (12, 14), afin de produire un siège définitif sur un arbre.

4. Procédé de fabrication d'un agencement d'engrenage planétaire, qui comprend une cage de transmission planétaire et plusieurs roues droites composées à denture hélicoïdale (10), dans lequel chacune des roues droites composées à denture hélicoïdale (10) est fabriquée selon l'une quelconque des revendications 1 à 3.

5. Procédé selon la revendication 4, **caractérisé en ce que** l'on forme sur la cage de transmission planétaire des sièges de palier pour l'appui rotatif des roues droites composées à denture hélicoïdale (10), dans lequel les sièges de palier sont disposés de façon coplanaire l'un par rapport à l'autre.

6. Procédé selon la revendication 5, **caractérisé en ce que** les roues droites composées à denture hélicoïdale (10) sont montées de façon rotative sur la cage de transmission planétaire à l'aide de paliers fixés sur les sièges de palier, dans lequel les paliers sont disposés de façon coplanaire l'un par rapport à l'autre.
